# EUROPEAN PATENT SPECIFICATION

(11) **EP 1 192 230 B1**
(45) Date of publication and mention of the grant of the patent: **02.12.2009**
(21) Application number: 00942563.8
(22) Date of filing: 23.06.2000
(51) Int. Cl.: C09D 167/00, C09D 5/03

(54) **A BINDER COMPOSITION FOR A POWDER PAINT**
BINDEMITTELZUSAMMENSETZUNG FÜR PULVERLACK
COMPOSITION DE LIANT POUR PEINTURE EN POUDRE

(30) Priority: 02.07.1999 NL 1012497
(43) Date of publication of application: 03.04.2002
(73) Proprietor: DSM IP Assets B.V., 6411 TE Heerlen (NL)
(72) Inventor: SCHUTTE, Marcellinus, Hermanus, Johannes, NL-8101 DA Raalte (NL); HOFKAMP, Albertus, Ronald, NL-1602 MK Enkhuizen (NL)
(74) Representative: van Tol-Koutstaal, Charlotte A.
(86) International application number: PCT/NL2000/000443
(87) International publication number: WO 2001/002505

(56) References cited:
- EP-A- 0 649 890
- WO-A-91/14745
- WO-A-94/11451
- US-A- 3 932 358

## Description

The invention relates to a powder paint binder composition comprising a carboxyl functional polyester and a compound containing hydroxyalkylamide units.

As is evident from WO-A-95/01406, which describes a powder paint composition that contains a carboxyl functional polyester and a crosslinker containing β-hydroxyalkylamide units, it is assumed that it is difficult to catalyze the reaction between a hydroxyalkylamide and a compound containing carboxylic acid groups while the colour stability of the system is inadequate.

It is the object of the present invention to provide the possibility of controlling the reaction rate of the reaction between a carboxyl functional polyester and a crosslinker containing hydroxyalkylamide units while also obtaining the desired properties of the powder paint composition, for example a blister free layer thickness, and the powder coating obtained after curing of the powder paint.

The invention is **characterized in that** the polyester is an amorphous aromatic polyester having (cyclo)aliphatic end groups wherein the amount of end groups is between 9 wt.% and 100 wt.%, based on (cyclo)aliphatic end groups.

The presence of the (cyclo)aliphatic end groups ensures that the reaction rate of the powder paint system is (when comparing a polyester having the same acid value, viscosity and glass transition and cured with the same amount of crosslinker) relatively low so that a higher blister free layer thickness, an improved initial colour, an improved overbake and heat stability and an improved NOx /gas furnace resistance are obtained.

The aromatic polyester with (cyclo)aliphatic end groups preferably has end groups with units of a dicarboxylic or polycarboxylic acid.Suitable acids include for example cyclohexane dicarboxylic acid (CHDA), adipic acid, succinic acid, tetrahydrophthalic acid, hexahydrophthalic acid, decane dicarboxylic acid, azelaic acid and/or their anhydrides.

Preferably, the end groups are based on CHDA or adipic acid.

An increasing amount of (cyclo) aliphatic end groups results in an increase of the geltime and the coating properties improve upon an increase in the percentage of (cyclo)aliphatic end groups. According to a further preferred embodiment of the invention the amount of (cyclo)aliphatic end groups is higher than 20% and more preferably higher than 50% by weight.

The amount of end groups is the total amount of acid groups in the system which are available to react with the crosslinker.

The acid number of the amorphous polyester generally ranges between 10 and 125 mg KOH/gram of resin. Preferably, the acid number is between 15 and 100 mg KOH/gram of resin.

Polyesters for use in powder paint compositions are generally based on the residues of aliphatic polyalcohols and polycarboxylic acids.

The polycarboxylic acids are generally selected from the group comprising of aromatic and cycloaliphatic polycarboxylic acids. In particular use is made of dibasic acids. Examples of suitable polycarboxylic acids include isophthalic acid, terephthalic acid, hexahydroterephthalic acid (CHDA), 2,6-naphthalene dicarboxylic acid and 4,4-oxybisbenzoic acid and, in so far as obtainable, their anhydrides, acid chlorides or lower alkyl esters, such as for instance the dimethyl ester of naphthalene dicarboxylic acid. Although this is not required, the carboxylic acid component generally comprises at least approximately 50 mol.%, preferably approximately 70 mol.%, isophthalic acid and/or terephthalic acid.

Examples of other suitable aromatic cycloaliphatic and/or acyclic polycarboxylic acids include 3,6-dichlorophthalic acid, tetrachlorophthalic acid, tetrahydrophthalic acid, hexahydroterephthalic acid, hexachloroendomethylene tetrahydrophthalic acid, phthalic acid, azelaic acid, sebacic acid, decane dicarboxylic acid, adipic acid, succinic acid, trimellitic acid and/or maleic acid. These other carboxylic acids may be used in amounts of at most 50 mol.% of the total amount of carboxylic acids. These acids may be used as such or, in so far as available, in the form of their anhydrides, acid chlorides or lower alkyl esters.

Hydroxycarboxylic acids and/or optionally lactones may also be used, such as for instance 12-hydroxystearic acid, hydroxypivalic acid and ε-caprolactone. If desired, minor amounts of monocarboxylic acids, such as for instance benzoic acid, tert.-butyl benzoic acid, hexahydrobenzoic acid and saturated aliphatic monocarboxylic acids, can be used.

Suitable polyalcohols, in particular diols, that can be reacted with the carboxylic acids to obtain the polyester include aliphatic diols such as for instance ethylene glycol, propane-1,2-diol, propane-1,3-diol, butane-1,2-diol, butane-1,4-diol, butane-1,3-diol, 2,2-dimethyl propane diol-1,3 (= neopentylglycol), hexane-2,5-diol, hexane-1,6-diol, 2,2-bis-(4-hydroxy-cyclohexyl) propane (hydrogenated bisphenol-A), 1,4-dimethylol cyclohexane, diethylene glycol, dipropylene glycol and/or 2,2-bis[4-2-hydroxylethoxy) phenyl]propane, the hydroxypivalic ester of neopentyl glycol.

Minor amounts, for instance less than approximately 15 wt.%, but preferably less than 4 wt.%, of trifunctional alcohols or acids can be used to obtain branched polyesters. Examples of suitable polyols and polyacids are glycerol, hexane triol, trimethylol ethane, trimethylol propane, tris-(2-hydroxyethyl) isocyanurate and trimellitic acid.

Tetrafunctional monomers are generally not preferred, for these may give rise to excessive branching or gelling, although in very small amounts they can be used. Examples of suitable polyfunctional alcohols and acids are sorbitol, pentaerythritol and pyromellitic acid. For the synthesis of branched polyesters, however, trifunctional monomers are preferred.

The polyester preferably contains 5 to 30 wt.% units of aliphatic acids and/or aliphatic alcohols. Examples of these compounds are adipic acid, cyclohexane dicarboxylic acid, succinic acid, cyclohexane dimethanol and hydrogenated bisphenol-A.

The polyesters are prepared according to conventional methods by esterification or transesterification, optionally in the presence of customary catalysts such as, for instance, dibutyltin oxide or tetrabutyl titanate. The preparation conditions and the COOH/OH ratio may be selected so as to obtain end products that have an acid number or a hydroxyl number within the targeted range of values.

Preferably, the aromatic polyester with (cyclo)aliphatic end groups that is used in the present invention with the specific crosslinker is prepared in a number of steps.

For example, in a first step terephthalic acid may react in the presence of a diol excess. Such reactions yield a substantially hydroxyl functional polyester. In a second or in a next step an acid functional polyester may be obtained by reacting an aliphatic di- or tricarboxylic acid with the product of the first step. Suitable di- or tricarboxylic (cyclo)aliphatic acids include for example adipic acid, succinic acid, cyclohexane dicarboxylic acid (CHDA), adipic acid, tetrahydrophthalic anhydride, hexahydrophthalic anhydride, decane dicarboxylic acid, azelaic acid, heptane acid, stearic acid, isononanoic acid and/or their anhydrides.If desired , these acids may be combined with aromatic acids to obtain the desired properties.

The ratio of acid equivalents of the polyester and the hydroxyalkylamide equivalents generally ranges between 1 : 2 and 1 : 0.2 and this ratio preferably ranges between 1 : 1.6 and 1 : 0.5.

The ratio may be selected depending on the desired application.

If desired, depending on the desired properties, the crosslinker derived from hydroxyalkylamide groups may be combined with one or more other crosslinker(s).

Examples of suitable compounds containing hydroxyalkylamide groups include compounds having a structural formula according to formula (I): 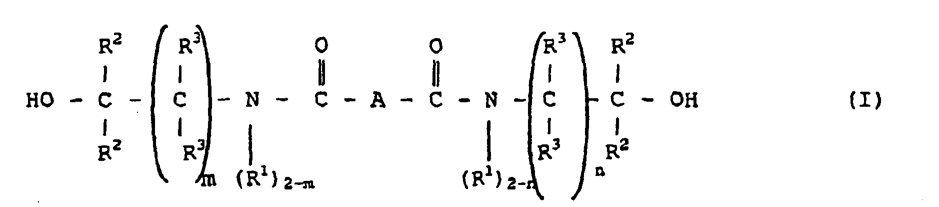 where:
- A represents a mono- or polyvalent organic group, derived from a saturated or non-saturated alkyl group having 1-60 carbon atoms (for instance ethyl, methyl, propyl, butyl, pentyl, hexyl, heptyl, octyl, nonyl, decyl, eicosyl, triacontyl, tetracontyl, pentacontyl, hexacontyl and the like); an aryl group, such as phenyl, naphthyl and the like; a trialkylene amino group, with 1-4 carbon atoms per alkylene group, for instance trimethylene amino, triethylene amino and the like; or an unsaturated residue with one or more alkenic groups (-C=C-) with (1-4) carbon atoms, such as for instance ethenyl, 1-methylethenyl, 3-butenyl-1,3-diyl, 2-propenyl-1,2-diyl, a carboxyalkenyl group, for instance a 3-carboxy 2-propenyl group and the like, an alkoxycarbonylalkenyl group with (1-4) carbon atoms, such as for instance a 3-methoxycarbonyl-2-propenyl group and the like;
- R¹ represents hydrogen, an alkyl group with 1-5 carbon atoms (for instance methyl, ethyl, n-propyl, n-butyl, sec. butyl, tert. butyl, pentyl and the like) or a hydroxyalkyl group with 1-5 carbon atoms (for instance 3-hydroxypropyl, 4-hydroxybutyl, 3-hydroxybutyl or the hydroxy derivatives of the pentyl isomers);
- R² and R³ are identical or different and both represent hydrogen or a straight or branched alkyl group with 1-5 carbon atoms, while one of the groups R² and one of the groups R³ together with the adjacent carbon atoms can also form a cycloalkyl group, such as for instance cyclopentyl and cyclohexyl; R² and R³ can also be hydroxyalkyl groups, such as for instance hydroxy(C₁-C₅) alkyl groups, preference being given to hydroxymethyl and 1-hydroxyethyl, and
- n and m independently of each other have a value of between 0 and 2.

Preferably:
A = (C₁-C₁₀) alkyl or hydrogen,
R¹ = hydrogen and
R² and R³ = hydrogen or hydroxy(C₁-C₂)alkyl.

Preferred embodiments of the compound according to formula (I) are compounds according to formulas (II) and (III): 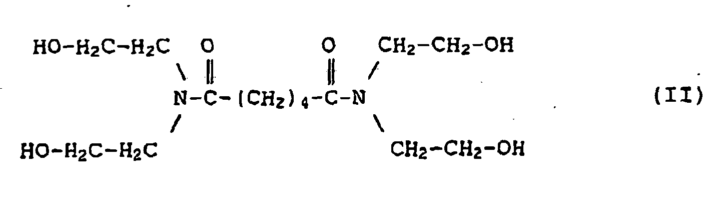 and

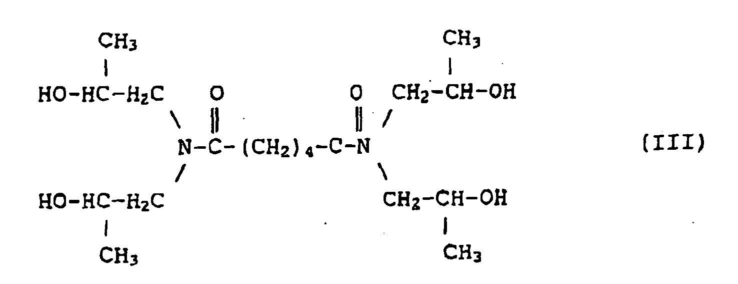

For example, compounds according to formula (II) are commercially available as Primid XL552^{™} and compounds according to formula (III) are commercially available as Primid QM1260^{™}.

It is also possible to use as the compound containing hydroxyalkylamide groups a condensation polymer as disclosed in for example WO 99/16810. This polymer contains hydroxyalkylamide groups and has for instance a weight average molecular mass of between 800 and 50,000 g/mol, a number average molecular mass of between 600 and 10,000 and a functionality of between 2 and 250.

This polymer may contain at least a group according to formula (IV): 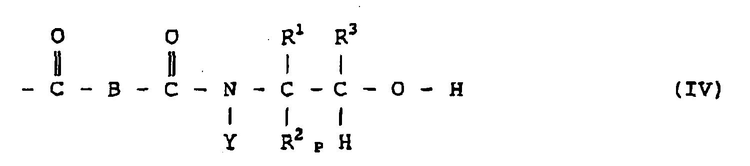 where 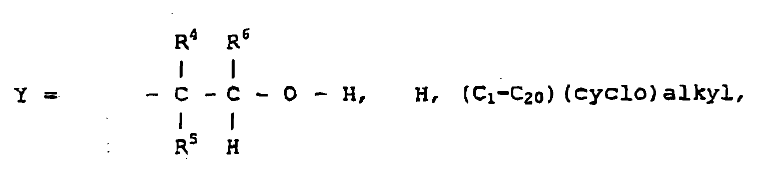 or (C₆-C₁₀) aryl,
B = (C₂-C₂₀), optionally substituted, aryl or (cyclo)alkyl aliphatic diradical,
R¹, R², R³, R⁴, R⁵ and R⁶ are identical or different, and independently of each other can be H, (C₆-C₁₀) aryl or (C₁-C₈)(cyclo)alkyl radicals and
p = 1-4.

Preferably p=1.

The polymer containing β-hydroxyalkylamide groups may be a polymer according to formula(V): 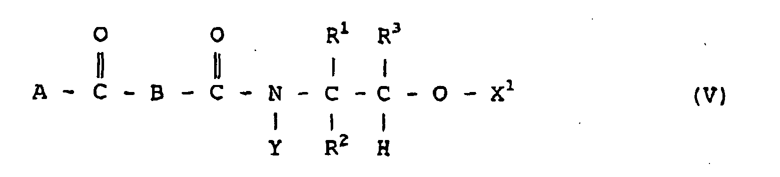 where: 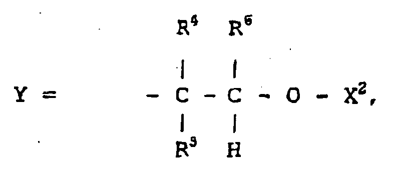 H, (C₁-C₂₀) (cyclo) alkyl or (C₆-C₁₀)aryl
B = (C₂-C₂₀), optionally substituted, aryl or(cyclo)alkyl aliphatic diradical, 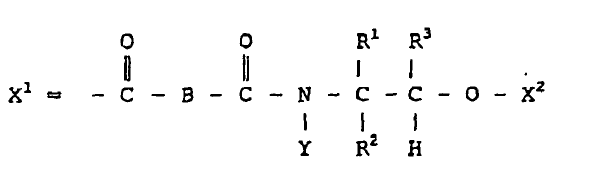 X² = H or X¹ and
R¹, R², R³, R⁴, R⁵ and R⁶ are identical or different, and independently of each other can be H, (C₆-C₂₀) aryl or (C₁-C₈) (cyclo) alkyl radicals or CH₂-OX².

In all formulas, R groups can, together or with adjacent carbon atoms, form part of a cycloalkyl group or a cycloaryl group.

The polymer containing β-hydroxyalkylamide groups may be a polymer according to formula (VI): 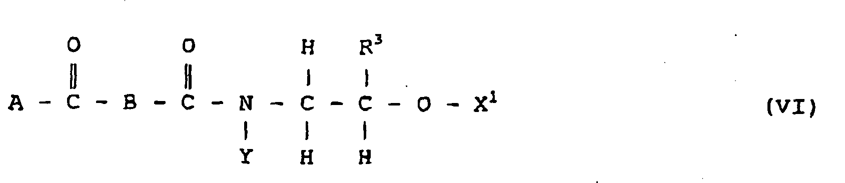 where: 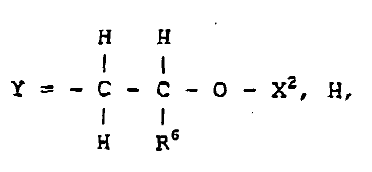 (C1-C20) (cyclo) alkyl or
(C₆-C₁₀) aryl, 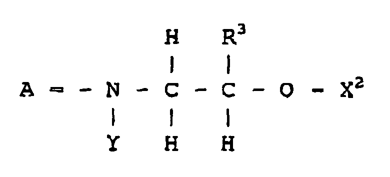 or OH,
B = (C₂-C₂₀), optionally substituted, aryl or (cyclo)alkyl aliphatic diradical, 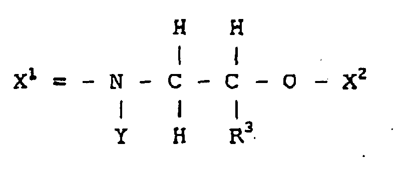 X² = H or X¹,
R³ = H or(C₆-C₁₀) aryl or(C₁-C₈)alkyl radical and
R⁶ = H or(C₆-C₁₀) aryl or(C₁-C₈)alkyl radical.

The preparation of thermosetting powder coatings in general and the chemical curing reactions of powder paints to yield cured coatings are described by Misev in Powder Coatings, Chemistry and Technology (1991, John Wiley) on pp. 42-54, p. 148 and pp. 224-226. A thermosetting binder composition is usually defined as the resinous part of the powder paint consisting of polymer and crosslinker.

According to a preferred embodiment of the invention no catalyst is added for the reaction between the acid polyester and the crosslinker.

During or after the polyester preparation optionally also a catalyst may be added for the reaction between acid polyester and crosslinker containing hydroxyl amide units, which is then preferably done during the powder paint preparation.

If desired, the usual additives such as for instance pigments, fillers, degassing agents, flow-promoting agents and stabilizers can be incorporated in the binder composition and the powder paint system according to the invention.

The binder composition according to the invention may be used in compositions with pigments as well as in compositions without pigments.

If pigments are used, suitable pigments are inter alia inorganic pigments, such as for instance titanium dioxide, zinc sulphide, iron oxide and chromium oxide, as well as organic pigments, such as for instance azo compounds.

Examples of suitable fillers are metal oxides, silicates, carbonates and sulphates.

As stabilizers use may, for instance, be made of primary and/or secondary antioxidants, UV stabilizers such as for instance quinones, (sterically hindered) phenolic compounds, phosphonites, phosphites, thioethers and HALS compounds (hindered amine light stabilizers).

Examples of degassing agents are benzoin and cyclohexane dimethanol bisbenzoate. The range of flow-promoting agents includes for instance polyalkyl acrylates, fluorohydrocarbons and silicon oils. Examples of other suitable additives are additives for improvement of the triboelectric chargeability, such as sterically hindered tertiary amines that are described in EP-B-371528.

Powder paints according to the invention may be applied in the customary manner, for instance by electrostatic spraying of the powder onto an earthed substrate and curing the coating by exposing it to heat at a suitable temperature and for a sufficiently long time. The applied powder may be heated, for instance, in a gas furnace, in an electric furnace or by means of infrared irradiation.

Thermosetting coatings based on powder paint (coating) compositions for industrial applications are further described in a general sense in Powder Coatings, Chemistry and Technology, Misev, pp. 141-173 (1991).

A composition according to the present invention may be applied in powder paint compositions for use on, for instance, metal, wood and plastic substrates. Examples are industrial coatings, coatings for machines and tools, domestic applications and component parts of buildings. The coatings are further suitable for use in the automotive industry, for instance primers and base coats and for coating of parts and accessories.

The system according to the invention may also be used in other technical fields such as for example the coating industry, in printing inks, in toner compositions and in adhesives applications.

WO 91/14745 discloses a composition comprising a crystalline polyester and optionally an amorphous polyester. WO 91/14745 teaches that the presence of a crystalline polyester results in a faster cure of the powder paint system whereas in the present application the cure rate is slower when increasing the amount of (cyclo) aliphatic end groups. The composition according to the present invention does not comprise a crystalline polyester.

The invention will be elucidated by means of the following non-restrictive examples.

In the following experiments and examples the acid value is determined according to DSM Resins test method TM 2400, the hydroxyl value is determined according to DSM Resins TM 2432, the viscosity is determined according to DSM Resins TM 2725 which uses a Rheometric CP5 viscometer, the glass transtion temperature is measured by means of a Mettler Differential Scanning Calorimeter according to DSM Resins TM 2076 and the amount of (cyclo)aliphatic endgroups is determined with nuclear magnetic resonance (according to SAM 5099).

### Experiment I

### Preparation of polyester resin I

A four-litre reactor vessel fitted with a thermometer, a stirrer and a distillation set-up was charged with 9.9 g trimethylolpropane, 1315.5 g terephthalic acid, 258.9 g isophthalic acid, 1099.0 neopentylglycol, 0.05 wt.% dibutyltinoxide and 0.05 wt.% tris-nonylphenyl phosphite.

Then, with stirring and while a light nitrogen flow was passed over the reaction mixture, the temperature was raised to 170°C, upon which water formed. The temperature was gradually raised further to a maximum of 245°C and the water was removed by distillation. The reaction was continued until the acid number of the polyester was less than 11.3 mg KOH/g.

Subsequently, in a second step, 227.7 g adipic acid was added to the reaction vessel and further esterification took place at 240°C and a polymer with an acid number of 31.7 was obtained. The last part of the second step of the process was carried out at reduced pressure.

The resulting resin had the following characteristics:
- acid number: 31.7 mg KOH/g;
- hydroxy number: 3.3 mg KOH/g;
- viscosity: 16.5 Pas;
- Tg: 45°C;
- the amount of aliphatic end groups: 12%.

### Experiment II

### Preparation of polyester resin II

The method described in experiment I was repeated, with 9.9 g trimethylolpropane, 1028.9 g terephthalic acid, 1066.1 g neopentylglycol and 522.1 g cyclohexane dicarboxylic acid being used in the first step, up to an acid number of 10.5, after which 268.1 g cyclohexane dicarboxylic acid was added in the second step.

The resulting resin had the following characteristics:
- acid number: 33.3 mg KOH/g;
- hydroxy number: 4 mg KOH/g;
- viscosity: 16.4 Pas;
- Tg: 43°C;
- the amount of aliphatic end groups: 12%

### Experiment III

### Preparation of polyester resin III

The method described in experiment I was repeated, with 845 g terephthalic acid, 693 g neopentylglycol and 208 g isophtalic acid being used in the first step after which 91 g adipic acid was added in the second step.

The resulting resin had the following characteristics:
- acid number: 20.6 mg KOH/g;
- hydroxy number: 3.3 mg KOH/g;
- viscosity: 77 Pas;
- Tg: 53°C;
- the amount of aliphatic end groups : 60%

### Comparative Experiment A

### Preparation of polyester resin A

The method described in experiment I was repeated, with 19.9 g trimethylolpropane, 1315.5 g terephthalic acid, 1099.0 g neopentylglycol and 227.7 g adipic acid being used in the first step, up to an acid number of 11.2, after which 258.9 g isophtalic acid was added in the second step.

The resulting resin had the following characteristics:
- acid number: 32.8 mg KOH/g;
- hydroxy number: 4 mg KOH/g;
- viscosity: 16.3 Pas;
- Tg: 44°C;
- the amount of aliphatic end groups: 8%

### Examples I and II and Comparative Example A.

### Powder paint composition

Powder paint compositions were prepared in the customary manner by mixing and extruding 95 parts by weight of carboxyl functional polyester according to the previous experiments, 5 parts by weight of PRIMID XL 552™ and the additives (according to Table 1).

The compositions were ground, screened and electrostatically sprayed (Corona) onto aluminium test panels in the customary manner. After a curing cycle of 6 minutes at 200°C in a circulation furnace the panels were tested. The test results are given in Table 1.

**TABLE 1**

| | I | II | A |
|---|---|---|---|
| Polyester I | 95 | - | - |
| Polyester II | - | 95 | - |
| Polyester A | - | - | 95 |
| Primid XL 552™ | 5 | 5 | 5 |
| TiO₂ type Kronos 2160™ | 50 | 50 | 50 |
| Resiflow PV5™ | 1.5 | 1.5 | 1.5 |
| Benzoin | 0.7 | 0.7 | 0.7 |
| Extrusion, 200 RPM at 115°C on a 16 mm PRISM extruder | | | |
| Gel time at 200° after extrusion (seconds) | | | |
| | 96 | 131 | 87 |
| Gradient 10' 150-250°C impact at °C 160 inchpound on alu 0.9 mm pass at °C | 168 | 170 | 163 |
| Standard curing in minutes, °C | 6'200 | 6'200 | 6'200 |
| Impact: maximum impact of 60 Inch Pound at 75 µ on Q panel AL 46 | good | good | good |
| | | | |
| Blister-free layer thickness in µm | 100 | 117 | 93 |
| Initial b* upon curing (Dr.Lange) | 0.4 | 0.5 | 0.8 |
| NOx gas furnace simulation at 10'180°C; b* | 2.3 | 2.0 | 2.8 |
| Thermal stability test 60'200°C; b* | 1.8 | 1.6 | 2.3 |
| QUV- B313 cycle, 4 hours 50°C 100% relative humidity, 4 hours 60°C UV-B313 ASTM G53 | 445 | 456 | 425 |

## Claims

1. A powder paint binder composition comprising a carboxyl functional polyester and a compound containing hydroxyalkylamide units **characterized in that** the polyester is an amorphous aromatic polyester having (cyclo) aliphatic end groups wherein the total amount of acid groups in the system which acid groups are available to react with the crosslinker is between 9 wt.% and 100 wt. % based on (cyclo)aliphatic end groups and the powder paint binder composition does not comprise a crystalline polyester.

2. A binder composition according to Claim 1, **characterized in that** the (cyclo) aliphatic end groups are based on di- or polycarboxylic acids.

3. A binder composition according to Claim 2 **characterised in that** the acid is cyclohexane dicarboxylic acid (CHDA), adipic acid, succinic acid, tetrahydrophthalic acid, hexahydrophthalic acid, decane dicarboxylic acid, azelaic acid and/or their anhydrides.

4. A binder composition according to Claim 3, **characterized in that** the acid is cyclohexane dicarboxylic acid or adipic acid.

5. A powder paint composition comprising a binder composition according to any one of Claims 1-4.

6. A powder coating obtained via curing of a powder paint composition according to Claim 5.

7. A wholly or partly coated substrate, **characterized in that** a powder coating according to Claim 6 is used as the coating.

## Patentansprüche

1. Pulverlackbindemittelzusammensetzung, enthaltend einen carboxylfunktionellen Polyester und eine Hydroxyalkylamid-Einheiten enthaltende Verbindung, **dadurch gekennzeichnet, daß** es sich bei dem Polyester um einen amorphen aromatischen Polyester mit (cyclo)aliphatischen Endgruppen handelt, wobei die Gesamtmenge an Säuregruppen, die für die Reaktion mit dem Vernetzer zur Verfügung stehen, in dem System zwischen 9 Gew.-% und 100 Gew.-%, bezogen auf (cyclo)aliphatische Endgruppen liegt und die Pulverlackbindemittelzusammensetzung keinen kristallinen Polyester enthält.

2. Bindemittelzusammensetzung nach Anspruch 1,
**dadurch gekennzeichnet, daß** die (cyclo)aliphatischen Endgruppen auf Di- oder Polycarbonsäuren basieren.

3. Bindemittelzusammensetzung nach Anspruch 2,
**dadurch gekennzeichnet, daß** es sich bei der Säure um Cyclohexandicarbonsäure (CHDA), Adipinsäure, Bernsteinsäure, Tetrahydrophthalsäure, Hexahydrophthalsäure, Decandicarbonsäure, Azelainsäure und/oder deren Anhydride handelt.

4. Bindemittelzusammensetzung nach Anspruch 3,
**dadurch gekennzeichnet, daß** es sich bei der Säure um Cyclohexandicarbonsäure oder Adipinsäure handelt.

5. Pulverlackzusammensetzung, enthaltend eine Bindemittelzusammensetzung nach einem der Ansprüche 1-4.

6. Pulverlack, erhalten durch Härten einer Pulverlackzusammensetzung nach Anspruch 5.

7. Ganz oder teilweise lackiertes Substrat, **dadurch gekennzeichnet, daß** als Lack ein Pulverlack nach Anspruch 6 verwendet wird.

## Revendications

1. Composition de liant de peinture en poudre comprenant un polyester à fonction carboxy et un composé contenant des motifs hydroxyalkylamide, **caractérisée en ce que** le polyester est un polyester aromatique amorphe ayant des groupements terminaux (cyclo)aliphatiques où la quantité totale de groupements acides dans le système, lesquels groupements acides sont disponibles pour réagir avec l'agent de réticulation, est comprise entre 9 % en poids et 100 % en poids sur la base des groupements terminaux (cyclo)aliphatiques et la composition de liant de peinture en poudre ne comprend pas de polyester cristallin.

2. Composition de liant selon la revendication 1, **caractérisée en ce que** les groupements terminaux cyclo(aliphatiques) sont à base d'acides di- ou polycarboxyliques.

3. Composition de liant selon la revendication 2, **caractérisée en ce que** l'acide est l'acide cyclohexanedicarboxylique (CHDA), l'acide adipique, l'acide succinique, l'acide tétrahydrophtalique, l'acide hexahydrophtalique, l'acide décanedicarboxylique, l'acide azélaïque et/ou leurs anhydrides.

4. Composition de liant selon la revendication 3, **caractérisée en ce que** l'acide est l'acide cyclohexanedicarboxylique ou l'acide adipique.

5. Composition de peinture en poudre comprenant une composition de liant selon l'une quelconque des revendications 1 à 4.

6. Revêtement en poudre obtenu par durcissement d'une composition de peinture en poudre selon la revendication 5.

7. Substrat totalement ou partiellement revêtu, **caractérisé en ce qu'**un revêtement en poudre selon la revendication 6 est utilisé comme revêtement.
